# EUROPEAN PATENT APPLICATION

(11) **EP 4 745 082 A1**
(43) Date of publication of application: **20.05.2026**
(21) Application number: 24306931.7
(22) Date of filing: 18.11.2024
(51) Int. Cl.: C01B 3/38

(54) **INERT GAS REJECTION FOR HIGH PURITY HYDROGEN PRODUCTION WITH LOW CARBON DIOXIDE EMISSIONS**

(71) Applicant: Technip Energies France, 92741 Nanterre Cedex (FR)
(72) Inventor: ELSEVIERS, Wim Frans, 92741 Nanterre Cedex (FR); RIEGMAN, Jan-Jaap, 92741 Nanterre Cedex (FR)
(74) Representative: Edson, Russell Gregory

(57) **Abstract**

Described are hydrogen production plants and processes for producing and separating syngas from a hydrocarbon feedstock and implementing these plants and processes. Also disclosed are the use of and system components to remove inert gases from hydrocarbon plants and processes.

## Description

### Technical Field

The present disclosure relates generally to hydrogen production plants and processes for producing and separating syngas from a hydrocarbon feedstock as well as methods of implementing these plants and systems. More specifically, but not by way of limitation, this disclosure relates to the use of and system components to remove inert gases from hydrogen production plants and processes.

### Background

Hydrogen generation from hydrocarbon feeds through reforming with steam is an established industrial process for hydrogen generation. Carbon dioxide (CO₂) is formed during the reforming and water gas shift reactions, as well as from the combustion process providing the heat of reaction, and is typically emitted into the atmosphere from the stack of a fired heater. However, it is advantageous to adopt the implementation of low-carbon processes to transition towards a carbon-neutral future. Recent technological advancements have incorporated CO₂ capture into the process flow scheme to reduce the carbon intensity of the generated hydrogen. Capturing at least 60 % of the CO₂ generated by the process qualifies the plant to be a "blue" hydrogen plant, although for grassroots plants, CO₂ capture rates of typically 90%, or more preferably, in excess of 95%, are being requested. In recent years, an increasing industrial focus on the environmental emissions and reduction of the carbon footprint challenges the design of syngas production facilities to reduce carbon footprint as well.

A conventional "grey" hydrogen plant emits approximately 10 kilograms of CO₂ per kilogram of hydrogen produced. A capture rate of 60% therefore corresponds to a carbon intensity of 4 kg CO₂ per kilogram of H₂ produced. This number refers to the direct emissions from the production process (scope 1) and does not include the associated emissions of the electrical power consumed (scope 2), or the emissions associated with the delivery of the hydrocarbon feedstock or the emissions from the use of the generated hydrogen (scope 3). The lifelong emissions for the hydrogen produced need to account for these 3 contributions over the length of the production plant life. For example, the United States government will provide tax credits for the production of clean hydrogen under the Inflation Reduction Act Section 45V, if the lifelong emissions of the production facility are less than 4 kilograms of CO₂ equivalent per kilogram of hydrogen produced, with increasing values for the tax credit if lifelong emissions fall below 0.45 kilograms of CO₂ equivalent per kilogram of hydrogen produced.

Section 45Q of the Inflation Reduction Act provides additional tax credits for CO₂ Capture per metric ton of CO₂ captured from the CO₂ emitting process. To be eligible for the highest tax credits under IRA 45V and 45Q, it is important to have hydrogen production technology available that ensures the highest possible Carbon capture from the production process to achieve very low carbon intensity levels for the generated hydrogen, with targets set as low as 0.1 kg CO₂e/kg H₂, or 99 % or higher CO₂ capture from the process. Tax incentives like IRA 45V and 45Q are the necessary means for the industry sector to adopt the implementation of low-carbon processes to transition towards a carbon-neutral future but are only meaningful when the targets become achievable.

Various methodologies for decreasing CO₂ emissions are known in the art, but the ability to decrease CO₂ emissions is limited by power considerations and the purity of the hydrogen generated.

For example, CO₂ capture in hydrogen production units based on reforming of hydrocarbons can be carried out at different locations within the plant. Most commonly, the CO₂ capture location would be the stack of the fired heater as this would allow capturing the emissions from both the process conversion and the combustion of the feed hydrocarbons. Such post-combustion capture technology is available but is not yet well-referenced. The main challenges to applying the technology are the conditions of the flue gas stream from which the CO₂ needs to be captured: a hot gas stream at atmospheric pressure, containing large quantities of water vapor that need to be condensed prior to the CO₂ capture, the presence of excess oxygen from the combustion process that may degrade the amine-based solvent over time, and the presence of trace impurities like SOx and NOx that require separate treatment of the captured CO₂ product. Because of the low operating pressure, equipment and line/duct sizes become very large, making it also quite difficult to achieve carbon capture rates in excess of 95 %. This relatively low capture rate (for the targeted purpose of achieving 99%) makes the post-combustion capture process less suitable for the objectives set by hydrogen plants targeting full tax credits as provided by the IRA 45V and 45Q incentives.

More recent process schemes use cryogenic technology to combine CO₂ capture and liquefaction within a single process section, as described in US Patent 8,021,464 or US Patent Application 2023/0082135. Neither flow scheme is capable of capturing the unconverted carbon molecules from the purge stream that would be used as a fuel stream. Additional treatment of this stream would be required to convert it into a low carbon fuel fraction and a hydrocarbon recycle fraction as described in document (Provisional Filing Reference Number) FR2315086. The process of the current invention may also be applied to a hydrogen plant applying cryogenic CO₂ capture, though there may be some disadvantages with respect to power consumption in comparison to processes using pre-combustion CO₂ capture using amine-based solvents.

Document EP4244182A1 describes a process with a CO₂ capture unit that generates a CO₂-depleted stream that is used as low-carbon fuel in the fired heater of the plant, resulting in the ability to capture 90 % or more of the CO₂ generated in the process. Increasing the capture rate requires the inclusion of a purge gas recycle loop in the process to recycle the unconverted carbon molecules back as feed to the reforming section. The hydrogen that is also recycled with the unconverted carbon molecules negatively influences the reforming reaction's equilibrium and thereby reduces the plant's conversion efficiency when the target Carbon capture rate is increased.

Pre-combustion capture, which refers to CO₂ absorption in amine-based solvents from the syngas generated by the reforming and/or water gas shift reactions, also is an established technology that has been widely applied in ammonia and syngas generation plants and that can therefore be applied in hydrogen plants as well. The process utilizes primary, secondary and/or tertiary amines, often with a promoter to enhance the mass transfer, to absorb CO₂ in an aqueous solution of the amine that is contacted against the CO₂-rich process gas in counter-current absorption towers, filled with trays and/or packing to enhance the mass transfer between the liquid and vapor phases. The CO₂ loaded amine solution is then regenerated by a combination of pressure reduction and thermal regeneration, which releases the dissolved CO₂ back into the vapor phase from one or more regeneration towers. The main advantages of the amine absorption process in comparison to other CO₂ removal technologies are the low pressure drop and the very high selectivity for CO₂ - the treated gas is essentially only depleted in CO₂ and remains at nearly the same pressure as the CO₂-rich process gas, while the co-absorption of other components is minimal.

EP4279446B1 describes a hydrogen generation process with CO₂ removal according to FIG. 1. FIG. 1 depicts a plant for generating hydrogen comprising processes for introducing hydrocarbons (1) with steam (2) and (optionally) oxygen (3) in a reforming section (10), shifting the H₂/CO rich reformed gas (11) in a water gas shift section (20) to a CO₂/ H₂-rich syngas (21) from which the CO₂ (32) is removed with a CO₂ capture unit (30) installed upstream of the Hydrogen purification unit (40) that is fed with the treated syngas (31) from the CO₂ Capture Unit (30). The reject gas (42) from the hydrogen purification unit (40) contains unrecovered hydrogen, hydrocarbons and inert gases that are typically used as fuel. The purified hydrogen (41) from the hydrogen purification unit is a stream rich in H₂ containing 98 % mol or more H₂. Additional heating value for the combustion section (60) is provided by the reject gas (42) and at least one of the other low-carbon streams, crude hydrogen fuel (33) or pure hydrogen fuel (43), or a combination. A convection section (65) is installed to recover heat from the hot flue gases (61) leaving the combustion section (60). The ambient air (54) that is used as source of combustion oxygen may also be pre-heated in the convection section (65). The flue gas (62) from the convection section (65) is low in CO₂ and is not treated further. It is the only source of CO₂ emissions from the plant.

Increasing the use of pure hydrogen fuel (43) decreases the need for crude hydrogen fuel (33) and results in a lower carbon intensity of the fuel and thereby of the hydrogen produced, at the expense of an increase in the size of the Hydrogen Purification Unit (40). A further reduction of the carbon intensity of the hydrogen product is achieved through abandoning the use of the reject gas (42) as fuel and recycling it back to the feed side of the hydrogen plant instead. The efficiency loss in the reforming reactions caused by the hydrogen recycling is neutralized by additional process improvements. These involve the implementation of a reject gas compressor (45) to compress the reject gas (42) to feed a hydrogen-selective membrane unit (50). This membrane unit (50) selectively removes the hydrogen from the compressed reject gas (44) and routes it as a low carbon permeate fuel stream (51) to the combustion section (60), while recovering the hydrocarbon-rich retentate stream (52) that is routed after compression by hydrocarbon recycle compressor (55) as carbon rich recycle gas (53) to the reforming section (10), resulting in a reduced consumption of feed hydrocarbons (1) and steam (2) and thereby an improved energy efficiency.

Further decarbonization can be reached by decarbonizing the crude hydrogen fuel stream (33) by routing it as an additional feed stream (35) to the membrane instead. A system designed in accordance with the flow scheme of EP4279446B1 can potentially achieve a carbon capture rate of 98.0 %. Improving the carbon capture rate to 98.5% and even 99.0 % is still possible, however at the cost of an increasing power consumption of the reject gas recycle stream for each increment in carbon capture rate, as illustrated in the Base 1 and Base 2 cases of the EXAMPLES of the present disclosure (below).

Without being bound by theory, the main cause for this increased power consumption is the inert gas impurities present in the feed streams to the unit, such as nitrogen N₂ from the natural gas-based hydrocarbon feed (1) and/or Argon from the oxygen feed (3) when an oxidative reforming process is used. Inert gases enter the process and pass through the CO₂ capture unit (30) and hydrogen purification section (40) into the reject gas (42). Because the hydrogen-selective membrane unit (50) has low selectivity towards Nitrogen N₂ and Argon Ar, these impurities get recycled into the carbon rich recycle gas (53) together with the unconverted carbon molecules CO and CH₄ and accumulate in the system until the level of inert gases purged from the loop (by the low carbon fuel (33), hydrogen product (41) and CO₂ product (32) streams) balances the net ingress of inert gases to the system with the feed streams (hydrocarbon feed (1) and oxygen (3)).

In many plants the purity of the hydrogen product (41) may be such that an increased slippage of inert gases into the product can be allowed (up to 2 % of inert gases), which limits the accumulation of inert gases in the system. ISO 14687:2019 Grade A tolerates up to 2 % of other gases for fuel use, but Grade D for PEM fuel cell road vehicle applications imposes a much more stringent purity requirement of 99.97 %. In hydrogen plants designed for generating this level of purity, the ability for purging inert gases from the system with the hydrogen product is very much reduced. The recycling to the feed side of reject gas from the hydrogen purification unit results in an accumulation of these inert gases in the system that can increase to as much as 10 times the net amount coming in with the feed streams. This problem can be solved by direct firing of crude hydrogen fuel (33) or reject gas (42), which again increases the carbon intensity of the hydrogen product stream as both streams still contain unconverted carbon molecules. Changing the reforming conditions to achieve even lower residual methane and carbon monoxide levels would require increased generation of steam and reduces the hydrogen plant energy efficiency as more hydrocarbon feed would need to be consumed to generate the additional steam. A different solution that does not affect the hydrocarbon feed consumption or plant energy consumption is preferred.

US 12,036,505B2 describes a three-product PSA process that could be applied to the Hydrogen Purification Unit (40). This three-product PSA process generates a fuel stream from within the hydrogen separation unit (40). The applicability of this three-product PSA process as Hydrogen Purification Unit (40) for the rejection of inert gas components strongly depends on the allowance for slipping light-adsorbable inert gas components with the hydrogen product stream (41). To allow the selectivity of slipping inert gases in sufficiently high concentrations during the co-current depressurization (vent) step generating the third product stream, while avoiding simultaneous slippage of carbon impurities with this third product stream, the PSA should be operated at a hydrogen product purity that permits a high accumulation of inert gases near the top of the bed, while carbon species remain adsorbed lower in the adsorbent bed during the co-current depressurization steps. This implies that the so-called provide purge gas stream, which is generated during a co-current depressurization step taking place before the co-current depressurization step generating the third product stream, will also be enriched in inert gases. As this provide purge gas stream is the purging medium intended for the counter-current purging of the adsorbers, a contamination of the purging gas with inert gas impurities will make the generation of a high-purity hydrogen product stream very difficult if not nearly impossible, as the purging stream's inert impurities will remain in the top section of the adsorbent beds. Vice-versa, operating the PSA at a 99.97 % hydrogen product purity, would result in an adsorbent bed that maintains such a high purity during the co-current depressurization steps, that the third product stream generated during a co-current depressurization step, would still be very low in inert gases content, resulting in hardly any rejection of inert gases from the process, or would enrich almost evenly in carbon species and inert gases during the depressurization, generating a fuel gas stream product that cannot be labeled as a low-carbon fuel gas stream. A very high hydrogen product purity target of 99.97 %, therefore would not benefit from the application of a three-product PSA process in the Hydrogen Purification Unit (40).

Thus, a continuing need exists to provide alternative processes and equipment to produce high purity hydrogen, in particular processes/equipment addressing one or more of the above indicated drawbacks and allowing for a reduction in greenhouse gas emissions (carbon dioxide, methane). In particular, a continuing need exists to provide an efficient way to produce hydrogen, syngas or syngas derived products, such as ammonia, methanol, or synthetic fuels, from hydrocarbon feeds by reforming processes, with higher purities but maintaining the same production capacities and without increasing power consumption and/or greenhouse gas emissions.

Some objectives of the present disclosure include plants for generating high-purity hydrogen (e.g., 98.0 % mole or higher, preferably 99.9 % mole, most preferably 99.97 % mole pure), with Carbon Capture Rates (defined as total moles of CO₂ captured in the CO₂ product stream from the plant, divided by the total moles of Carbon entering the plant as hydrocarbon feed or fuel) in excess of 99.0 %, with reduced power consumption, to realize the generation of hydrogen with a carbon intensity of less than 0.1 kg CO₂ emitted / kg H₂ produced, preferably less than 0.01 kg CO₂ emitted / kg H₂ produced with respect to direct emissions, and a carbon intensity of less than 0.5 kg CO₂ emitted / kg H₂ produced with respect to direct and indirect emissions from the associated power requirements.

### Summary

One or more embodiments of the disclosure relate to hydrogen production plants comprising: a reforming section for converting a hydrocarbon feed into a reformed gas; a water gas shift section for converting the reformed gas into a syngas; a syngas purification section for treating the syngas comprising an optional compressor and at least one of: (1) a CO₂ capture unit, and (2) a hydrogen purification section, said syngas purification section generating at least a CO₂-rich product stream, a high-purity Hydrogen product stream, and a reject gas depleted in Hydrogen and CO₂; an inert gas rejection unit (IGRU) configured to be fed the reject gas depleted in Hydrogen and CO₂ and to generate a fuel stream comprising one or more of H₂, N₂, Argon, and Helium, and a carbon recycle stream comprising one or more of CO, CH₄, CO₂; a carbon recycle compressor configured to compress the carbon recycle stream to produce a compressed carbon recycle stream; a passageway for recycling the compressed carbon recycle stream to the reforming section; a combustion section configured to generate heat from at least one of: at least a portion of the fuel stream comprising one or more of H₂, N₂, Argon, and Helium; at least a portion of the high purity hydrogen stream; or a low-carbon make-up fuel stream; and a convection section configured for heat recovery.

One or more embodiments of the disclosure relate to methods for producing hydrogen comprising: reforming a hydrocarbon feed with steam and optionally oxygen in a reforming section to produce a reformed gas stream; converting the reformed gas stream into a syngas using a water gas shift section; treating the syngas comprising: (1) generating a CO₂ -rich product stream using a CO₂ capture unit, (2) generating a high purity hydrogen product stream using a hydrogen purification unit, (3) recovering a reject gas depleted in Hydrogen and CO₂, and (4) optionally compressing the reject gas depleted in Hydrogen and CO₂; feeding the reject gas depleted in Hydrogen and CO₂ to an Inert Gas Rejection Unit demonstrating a selectivity to separate H₂ and one or more of N₂, Argon, Helium selectively to a fuel stream, and rejecting at least one or more of CO, CH₄, CO₂ selectively to a carbon recycle stream; compressing the carbon recycle stream using a carbon recycle compressor to produce a carbon recycle stream; recycling the carbon recycle stream back to the reforming section; generating heat using a combustion section; and recovering heat using a convection section.

One or more embodiments of the disclosure relate to the hydrogen production plant or method of the preceding paragraphs, wherein the carbon recycle stream comprising one or more of CO, CH₄, CO₂ is further separated by a membrane selective for the permeation of hydrogen to generate a hydrogen-enriched fuel stream that is routed via a passageway to the combustion section, and a hydrogen-depleted stream that is recycled to the reforming section.

One or more embodiments of the disclosure relate to the hydrogen production plants or methods of the preceding paragraphs, wherein the IGRU comprises a Pressure Swing Adsorption (PSA) process.

One or more embodiments of the disclosure relate to the hydrogen production plants or methods of the preceding paragraphs, wherein the IGRU comprises a Vacuum Pressure Swing Adsorption Process (VPSA).

One or more embodiments of the disclosure relate to the hydrogen production plants or methods of the preceding paragraphs, wherein the IGRU comprises a Membrane-Based Separation Process.

One or more embodiments of the disclosure relate to the hydrogen production plants or methods of the preceding paragraphs, wherein the reforming section comprises one or more reforming reactors comprising a pre-reformer, a steam methane reformer (SMR), an autothermal reformer (ATR), a partial oxidation (POX), a heat-recuperative reformer installed in series, and a heat-recuperative reformer installed in parallel.

One or more embodiments of the disclosure relate to the hydrogen production plants or methods of the preceding paragraphs, wherein the reforming section comprises a feed pre-treatment section configured to remove feed gas impurities that would poison downstream catalysts.

One or more embodiments of the disclosure relate to the hydrogen production plants or methods of the preceding paragraphs, wherein the feed gas impurities comprise sulphur, halides, (e.g., chlorides, fluorides), amines, mercury, sodium, phosphorus, other metals, other components removed from typical hydrogen production processes, or any combinations thereof.

One or more embodiments of the disclosure relate to the hydrogen production plants or methods of the preceding paragraphs, wherein the water gas shift section comprises at least one or more of a high temperature shift, a medium temperature shift, a low temperature shift, and an isothermal shift.

One or more embodiments of the disclosure relate to the hydrogen production plants or methods of the preceding paragraphs, wherein the CO₂ product comprises at least 95 %, at least 99 %, or at least 99.5 % of the carbon moles present in the hydrocarbon feed.

One or more embodiments of the disclosure relate to the hydrogen production plants or methods of the preceding paragraphs, wherein the high purity product comprises at least 99.97 % H₂ by mole.

One or more embodiments of the disclosure relate to the hydrogen production plants or methods of the preceding paragraphs, wherein the hydrogen-selective membrane unit comprises at least one of a polymeric material and a palladium sheet.

One or more embodiments of the disclosure relate to the hydrogen production plants or methods of the preceding paragraphs, wherein the hydrogen purification unit is a pressure swing adsorption (PSA) unit.

One or more embodiments of the disclosure relate to the hydrogen production plants or methods of the preceding paragraphs, wherein the CO₂ capture unit comprises at least one of: a solvent wash absorption system, a CO₂ Pressure Swing Adsorption system with at least 2 product streams, a three-product CO₂ Pressure Swing Adsorption System, a CO₂ Vacuum Pressure Swing Adsorption system, a cryogenic CO₂ separation system, or a membrane system selective for the permeation of CO₂.

One or more embodiments of the disclosure relate to the hydrogen production plants or methods of the preceding paragraphs, wherein the convection section for heat recovery performs at least one of feed gas preheating, combustion air preheating, fuel preheating and/or steam generation, and recovering heat from the hot flue gas to release colder flue gas that is low in carbon content.

One or more embodiments of the disclosure relate to the hydrogen production plants or methods of the preceding paragraphs, wherein the colder flue gas contains less than 5 % of the carbon moles present in hydrocarbon feed, or less than 2%, or less than 1%, or less than 0.5 %.

This summary is not intended to identify key or essential features of the claimed subject matter, nor is it intended to be used in isolation to determine the scope of the claimed subject matter. The subject matter should be understood by reference to appropriate portions of the entire specification, any or all drawings, and each claim.

The foregoing, together with other features and examples, will become more apparent upon referring to the following specification, claims, and accompanying drawings.

### Brief Description of the Drawings

FIG. 1 illustrates a process flow diagram for generating hydrogen, according to processes known in the art as set forth in EP4279446B1.
FIG. 2 illustrates a process flow diagram for generating high-purity hydrogen (99.97 % pure), comprising an IGRU (70) according to at least some embodiments of the present disclosure.
FIG. 3 illustrates a process flow diagram for generating high-purity hydrogen (99.97 % pure), comprising an IGRU (70) and hydrogen-selective membrane unit (50) according to at least some embodiments of the present disclosure.
FIG. 4 illustrates a process flow diagram for generating high-purity hydrogen (99.97 % pure), comprising an IGRU (70) and a hydrogen-selective membrane unit (50) and integrated heat recovery, according to at least some embodiments of the present disclosure.
FIG. 5 illustrates a process flow diagram for generating high-purity hydrogen (99.97 % pure), comprising an IGRU (70) and a Hydrogen Purification Unit (40) and CO₂ capture Unit (30) in reverse order according to at least some embodiments of the present disclosure.
FIG. 6 illustrates a process flow diagram for generating high-purity hydrogen (99.97 % pure), comprising an IGRU (70) and a Hydrogen-Selective Membrane Unit (50) and integrated heat recovery, in which the Hydrogen Purification Unit (40) and a CO₂ capture Unit (30) order is reversed according to at least some embodiments of the present disclosure.
FIG. 7 illustrates a process flow diagram for generating high-purity hydrogen (99.97 % pure), with a Syngas Purification Section (80) comprising an IGRU (70) according to at least some embodiments of the present disclosure.
FIG. 8 illustrates a process flow diagram for generating high-purity hydrogen (99.97 % pure), with a Syngas Purification Section (80) comprising an IGRU (70) and hydrogen selective membrane (50) according to at least some embodiments of the present disclosure.
FIG. 9 illustrates a process flow diagram for generating high-purity hydrogen (99.97 % pure), with a Syngas Purification Section (80) comprising an IGRU (70) and hydrogen selective membrane (50), heat-integrated according to at least some embodiments of the present disclosure.

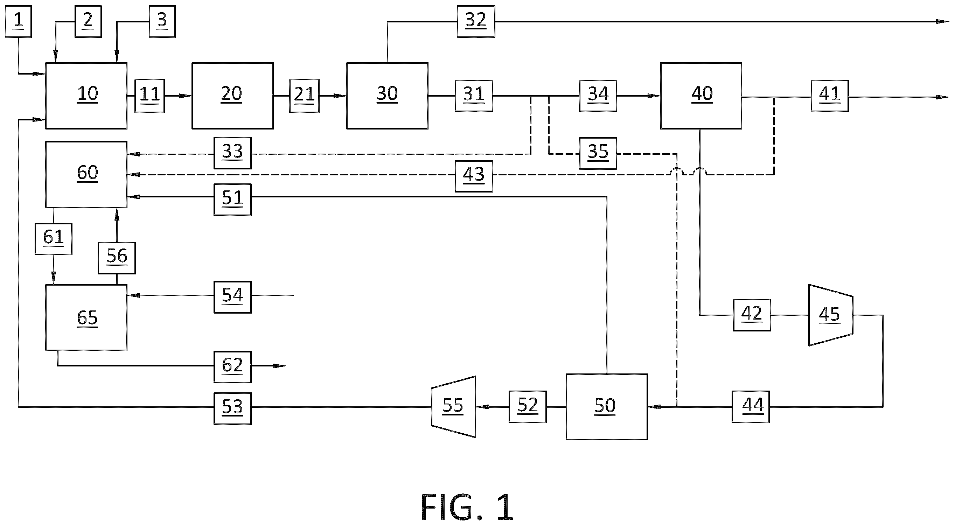

### Legend for Figures 1-9

| | |
|---|---|
| 1 | Hydrocarbon feed |
| 2 | Steam |
| 3 | Oxygen |
| 10 | Reforming section (including pre-treatment, if applicable) |
| 11 | Reformed gas |
| 20 | Water gas shift section |
| 21 | Syngas |
| 30 | CO₂ Capture Unit |
| 31 | Treated syngas |
| 32 | CO₂ Product |
| 33 | Crude H₂ fuel |
| 34 | PSA feed qas |
| 35 | Crude H₂ to membrane |
| 40 | Hydrogen Purification Unit |
| 41 | Hydrogen product |
| 42 | Reject gas |
| 43 | Pure H₂ fuel |
| 44 | Inert Gas Rejection Unit feed qas |
| 45 | Reject gas compressor |
| 46 | High pressure reject gas |
| 50 | Membrane Unit |
| 51 | Permeate fuel |
| 52 | Retentate recycle |
| 53 | Carbon-rich recycle gas |
| 54 | Combustion air |
| 55 | Hydrocarbon recycle compressor |
| 56 | Pre-heated combustion air |
| 60 | Combustion section |
| 61 | Hot flue gas |
| 62 | Flue gas to stack |
| 65 | Convection section |
| 70 | Inert Gas Rejection Unit (IGRU) |
| 71 | Inert Gas Fuel |
| 72 | Carbon Recycle |
| 73 | High pressure carbon recycle |
| 74 | Hot carbon recycle |
| 75 | Carbon recycle compressor |
| 80 | Syngas Purification Section |

### Detailed Description

Certain aspects and features of the present disclosure relate to a plant, process, or system for generating high-purity hydrogen (e.g., 98.0 % or higher, preferably 99.9 % mole, but most preferably 99.97 % mole pure) with a target Carbon Capture Rate in excess of 99.0 %, for example, with equivalent or reduced power consumption compared with previous processes. In order to help achieve these objectives, some embodiments include an Inert Gas Rejection Unit (IGRU) in a carbon recycle loop. The IGRU separates hydrocarbons from hydrogen plus inert gases and thereby avoids inert gases accumulating in the hydrogen plant, more specifically in plants designed for high-purity hydrogen where venting of inert gases with the hydrogen product is not possible. Thus, some embodiments disclose a plant, process, or system for generating high-purity hydrogen (e.g., 98.0 % purity or higher, preferably 99.9 % mole, but most preferably 99.97 % mole pure) with a target Carbon Capture Rate in excess of 99.0 % with reduced power consumption comprising an IGRU in the carbon recycle loop. Some embodiments disclose a plant, process, or system for generating hydrogen comprising one or more of a reforming section (10), a water gas shift section (20), a CO₂ capture unit (30), a hydrogen purification unit (40), a reject gas compressor (45), a hydrocarbon recycle compressor (55), a combustion section (60), a convection section (65), and an inert gas rejection unit (IGRU) (70).

Thus, in some embodiments, the plant, process, or system is capable of generating hydrogen that is at least 99.95, 99.96, 99.97, or 99.99% pure.

### Reforming

In some embodiments, the plant, process, or system comprises a reforming section (10) for processing a hydrocarbon feedstock (1) with steam (2) and optionally oxygen (3) into a reformed gas (11). In certain embodiments, the reformed gas (11) is a H₂/CO-rich reformed gas. In some embodiments, the reforming section (10) may comprise a feed purification section for removing feed contaminants, including but not limited to sulfur components, halides, mercury and other metals. In some embodiments, the reforming section (10) may include one or more of the following reforming reactors: a pre-reformer, steam methane reformer (SMR), an autothermal reformer (ATR), a partial oxidation (POX), a heat-recuperative reformer (e.g., a heat exchanger reformer) installed in series, and/or a heat-recuperative reformer (e.g., a heat exchanger reformer) installed in parallel.

In some embodiments, the plant, process, or system comprises an SMR-based process. In other embodiments, the plant, process, or system comprises an ATR-based reforming process. Oxidative reforming processes based on Autothermal Reforming (ATR) have a lower fuel demand in comparison to processes based on Steam Methane Reforming (SMR) and may achieve 99 % Carbon Capture Rate with lower fuel demand. However, a reduced fuel demand equally reduces the amount of inert gases that can be purged from the recycle loop with the low-carbon fuel stream and thereby increases the accumulation of inert gases in the plant. Moreover, the calculation of the lifelong carbon emissions also needs to account for the associated emissions from the power consumption of the Air Separation Unit providing the oxygen feed (3). The SMR-based processes do not require oxygen feed streams and therefore have a much lower electrical power consumption but consume more feed hydrocarbons and low-carbon fuel. Therefore, both SMR-based as well as ATR-based reforming processes will exhibit the accumulation of inert gases in their recycle loops while targeting very high carbon capture rates at high product purity, and both processes will benefit from achieving very low lifelong carbon intensity for the hydrogen generated from the plants implementing the concept of this invention. In some embodiments, the carbon capture rate is at least 98.0, 98.5, 99.0, or 99.5%.

### Water-Gas Shift

In some embodiments, the plant, process, or system comprises a water gas shift section (20) for shifting the H₂/CO rich reformed gas (11) to a CO₂/ H₂-rich syngas (21). Thus, in some embodiments, the water gas shift section converts reformed gas (11) into syngas (21). In some instances, the water gas shift section (20) may include at least one or more of the following: a high temperature shift (e.g., from 300 °C to 350 °C at the inlet to less than 480 °C at the outlet), a medium temperature shift (e.g., from 180 °C to 230 °C at the inlet to less than 330 °C at the outlet), a low temperature shift (e.g., from 180 °C to 230 °C at the inlet to less than 250 °C at the outlet, and an isothermal shift (e.g., from 180 °C to 480 °C, preferably from 200 °C to 300 °C).

### Syngas Purification Section - CO₂ Capture and H₂ Purification

In some embodiments, the plant process or system comprises a Syngas Purification Section (80) that treats the syngas (21) and generates at least 3 streams: a first stream (32) that is enriched in CO₂, a second stream (41) that is a high-purity hydrogen product, and a reject gas stream (42) that is depleted in both CO₂ and H₂ in comparison to syngas stream (21).

In certain embodiments, the Syngas Purification Section (80) comprises a CO₂ capture unit (30) followed by a Hydrogen Purification Unit (40). In some embodiments, the CO₂ Capture Unit (30) is a solvent wash absorption system or a (vacuum) Pressure Swing Adsorption system ((V)PSA). In some embodiments, the Hydrogen Purification Unit (40) is a Pressure Swing Adsorption (PSA) System.

In other embodiments, the Syngas Purification Section (80) comprises a Hydrogen Purification Unit (40) followed by a CO₂ capture unit (30). In some embodiments, the hydrogen purification unit (40) is a pressure swing adsorption (PSA) unit. In some embodiments, the CO₂ capture unit (30) is a cryogenic CO₂ recovery system.

In some embodiments, the plant, process, or system comprises a CO₂ capture unit (30). In some embodiments, the capture unit (30) removes the CO₂ from syngas (21) to produce a CO₂-lean treated syngas (31) and a CO₂ product stream enriched in CO₂ (32). In some embodiments, the CO₂-lean treated syngas (31) feeds the hydrogen purification unit (40), which produces a high purity hydrogen product (41) and a reject gas (42). In some embodiments, the high purity hydrogen product is 98 % mole H₂ or higher (e.g., 98.5 % mole H₂ or higher, 99.0 % mole H₂ or higher, 99.5 % mole H₂ or higher, 99.9 % mole H₂ or higher, 99.95 % mole H₂ or higher, 99.97 % mole H₂ or higher, 99.99 % mole H₂ or higher, 99.999 % mole H₂ or higher, 99.9999 % mole H₂ or higher, or from 98.0 % mole H₂ to 99.9999 % mole H₂). In some embodiments, the reject gas (42) from the hydrogen purification unit (40) contains unrecovered hydrogen, hydrocarbons and inert gases that have been removed from the CO₂-lean treated syngas (31). In some embodiments, the CO₂ product (32) contains at least 95 %, preferably at least 99 %, most preferably at least 99.5 % of the carbon moles present in hydrocarbon feed (1). In plants, process, or systems designed according to these specific embodiments of the invention, the CO₂ capture unit (30) is preferably a solvent wash absorption system using a solvent that has a high selectivity for CO₂, or a PSA unit or VPSA unit designed for recovering CO₂. The hydrogen purification unit (40) can be a PSA unit designed for recovering high-purity Hydrogen product.

In some embodiments, the plant, process, or system comprises a Syngas Purification Section (80) for treating syngas (21). In some embodiments, treating syngas (21) comprises removing hydrogen and CO₂ and generating at least a CO₂-rich product stream (32), a high purity hydrogen product stream (41), and a reject gas lean in Hydrogen and CO₂ (44).

In some embodiments, the plant, process, or system comprises a reject gas compressor (45) for compressing the reject gas (42) to an inert gas rejection unit (IGRU) (70).

### Reject Gas Recycle

In some embodiments, the IGRU (as discussed in more detail below) separates the carbon species CO, CO₂ and CH₄ from the low-carbon fuel H₂ and inert gas comprising N₂, Helium, and/or Ar. In some embodiments, at least a portion of the fuel stream (72) from the IGRU is enriched in H₂, N₂, Helium, and/or Ar and is sent as fuel to the combustion section (60). In some embodiments, the plant comprises a hydrocarbon recycle compressor (55). In some embodiments, the hydrocarbon recycle compressor (55) compresses a carbon recycle stream (71) from the IGRU as a recycle hydrocarbon stream (53) which can be re-introduced to the reforming section (10) as feed gas, reducing the net import of hydrocarbon feed gas (1). In some embodiments, recycle to the reforming section can include any of: recycle to inlet of feed pre-treatment, recycle to pre-reformer inlet, recycle to main reformer inlet, recycle to secondary reformer inlet (when installed), recycle to heat exchanger reformer inlet, individually or in any combination thereof by splitting the stream into several parts. In some embodiments, recycle to the reformer can also include recycle to the inlet of the water gas shift section. In some embodiments, recycle to the reformer can also include recycle to the inlet of the Syngas Purification Section.

### Hydrogen-Selective Membrane

In some embodiments, the plant, process, or system comprises a hydrogen-selective membrane unit (50). In some embodiments, the carbon rich stream (71) from the IGRU is compressed by compressor (75) to a compressed carbon-rich stream (73) that feeds the membrane unit (50). In some embodiments, the membrane unit (50) selectively removes the hydrogen from the compressed carbon-rich stream (73) and routes it as a low carbon permeate fuel stream (51) to the combustion section (60), while recovering the hydrocarbon-rich retentate stream (52) that is routed after compression by hydrocarbon recycle compressor (55) as additional feed gas (53) to the reforming section (10). This can result in a reduced consumption of feed hydrocarbons (1) and steam (2) and thereby achieve improved energy efficiency, for example.

In certain embodiments, the hydrogen-selective membrane unit (50) is based on a polymeric material. In some embodiments, the hydrogen-selective membrane unit (50) is based on glassy polymeric membranes, where the membrane material comprises one or more of poly-imide, poly-sulphone, poly-aramid, cellulose acetate, or other polymeric materials that exhibit a selectivity to selectively permeate hydrogen, and any combinations thereof. In other embodiments, the hydrogen-selective membrane unit (50) is based on palladium sheets. Palladium sheets are very selective for H₂ but require operating temperatures in the range 300-350 °C that can require additional heating. The high selectivity of the Palladium sheets towards hydrogen can help ensure that the carbon slippage to the fuel permeate stream (51) remains ultra-low.

The installation of the IGRU (70) (as described further below) upstream of the membrane unit (50) in some embodiments, eliminates the disadvantage of the flow scheme described in document EP4279446 (B1) caused by the low selectivity of the membrane towards Nitrogen N₂ and Argon Ar. Because the IGRU can substantially reduce the concentrations of both these impurities in the feed stream (73) to the membrane unit (50), the quantity of the impurities recycled together with the unconverted carbon molecules (e.g., CO and CH₄) can also be significantly reduced. The advantage of reduced consumption of fresh feed gas by recycling unconverted carbon molecules is maintained.

### Combustion Section

In some embodiments, the plant, process, or system comprises a combustion section (60). The combustion section (60) can provide heat to other sections of the plant, process, or system through the combustion of at least one fuel stream. In some embodiments, heat transfer in the combustion section can occur mainly through radiative heat transfer from the flame to streams in the plant, process or system that require heat input.

In some embodiments, the combustion section (60) receives its primary fuel from the IGRU as the fuel stream enriched in inert gases (72). In some embodiments, the combustion section (60) receives its primary fuel from the IGRU as the fuel stream enriched in inert gases (72), together with the low carbon hydrogen rich permeate stream (51) from the membrane unit. In some embodiments, make-up fuel to complete the fuel demands of the combustion section (60) is provided from a slipstream (43) of the pure hydrogen product. Additionally, in some embodiments, the combustion section receives make-up fuel (e.g., a low-carbon make-up fuel). This can be the case during plant or process start-up, or when other fuel streams are not available, as examples.

### Convection Section

In some embodiments, the plant, process, or system comprises a convection section (65). In certain embodiments, the convection section (65) is used to recover heat from the hot flue gases (61) leaving the combustion section (60). In some embodiments, the ambient air (54) that is used as source of combustion oxygen may also be pre-heated in the convection section (65). All the fuel streams (72), (51) and (43) can be low in carbon content (ideally, free from carbon content) and therefore the flue gas (62) released from the convection section (65) can be very low in CO₂ concentration. Thus, in accordance with some embodiments, the plant, process, or system allows for the generation of ultra-low carbon intensity hydrogen product because all carbon molecules entering or being recycled in the process will eventually be converted into CO₂ and will be captured by the CO₂ capture unit (30).

In some embodiments, carbon capture rates in excess of 99.0 % are achievable while generating hydrogen of high purity (e.g., 98.0 % purity or higher, preferably 99.9 % mole, but most preferably 99.97 % mole pure) with high recovery in the Hydrogen Purification Unit (40).

### Inert Gas Rejection Unit (IGRU)

The plant, process, or system comprises an Inert Gas Rejection Unit (IGRU)(70). In some embodiments, the reject gas (44) is fed into the IGRU (70). In some embodiments, the IGRU (70) demonstrates a selectivity to separate H₂ and one or more of N₂, Ar, He selectively to a fuel stream (72), and rejects at least one or more of CO, CH₄, CO₂ selectively to a carbon recycle stream (71). In some embodiments, the inert gases are removed from the hydrocarbon recycle stream (53), to avoid or reduce the accumulation of inert gases in the recycle loop. This can result in a significant saving on power consumption for recycle gas compressors (45) and (55) and also reduce the inert gases content of the CO₂-lean treated syngas (31) that is fed to the Hydrogen Purification Unit (40).

In some embodiments, the IGRU uses a rate-selective Pressure Swing Adsorption (PSA) process comprising crystalline titanium silicate adsorbents. In some embodiments, the IGRU uses an equilibrium PSA process comprising activated alumina, silica gel, activated carbon and/or molecular sieve-type adsorbents or any combinations thereof. Plants or processes constructed using any of the above embodiments can achieve a certain selectivity between Nitrogen and Methane, for example. However, the full separation targeted for the IGRU is the separation between the group of Hydrogen H₂, Nitrogen N₂, Argon and Helium ("inert gases") on one side and the group of Carbon Monoxide CO, Carbon Dioxide CO₂, Methane CH₄ and eventually heavier hydrocarbons at the other side. The specific recovery rates are dependent on the design of the PSA unit. The design of the PSA refers to the selection of the adsorbent mix, the number of PSA adsorbers, the PSA process steps, their durations and the pressure levels of the individual PSA steps. Those skilled in the art of PSA design will confirm that the selection of the PSA adsorbent materials and the PSA cycle applied influence the performance that can be achieved by the process. In some embodiments, vapor-phase water H₂O from the feed gas inlet can at least mostly be separated by the IGRU with the inert gases. In other embodiments, the vapor-phase water H₂O from the feed gas inlet can at least primarily be separated by the IGRU with the carbon-containing compounds. In some embodiments, the vapor-phase water H₂O from the feed gas inlet can be separated by the IGRU into both the inert gases and the carbon-containing compounds.

### Plants, Processes, and Systems for Hydrogen Production with Low CO₂ Emissions

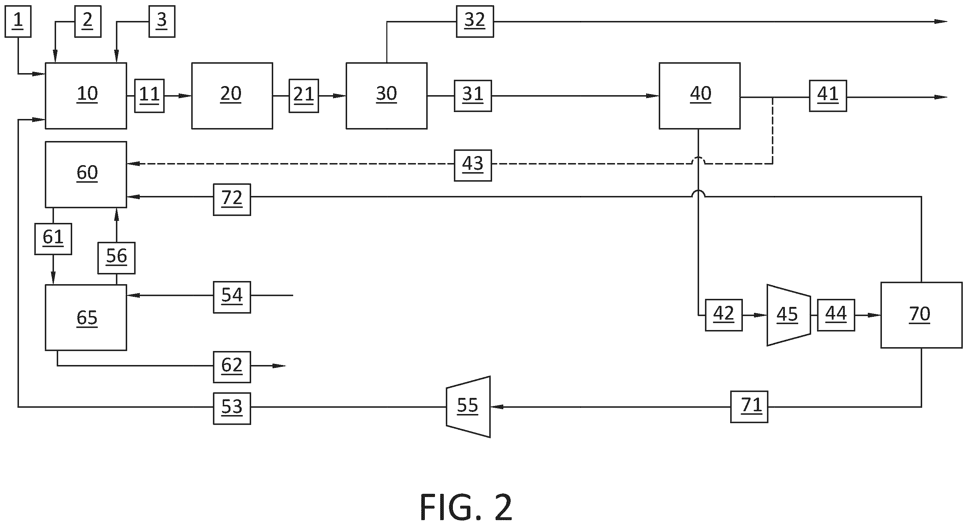

FIG. 2 depicts embodiments of a hydrogen production plant, process, or system according to the present disclosure, wherein hydrocarbons (1) are fed with steam (2) and optionally oxygen (3) in a reforming section (10), shifting the H₂/CO-rich reformed gas (11) to a CO₂/H₂-rich syngas (21) in a water gas shift section (20) and capturing the CO₂ from the CO₂/H₂-rich syngas (21) with a CO₂ capture unit (30), generating a CO₂ product stream (32) and a CO₂-lean treated syngas (31) that feeds the Hydrogen purification unit (40) producing hydrogen of high purity, (e.g., 99.97 % (mole) or higher). The reject gas (42) from the hydrogen purification unit (40) contains unrecovered hydrogen, hydrocarbons and inert gases that have been removed from the CO₂-lean treated syngas (31).

As depicted in FIG. 2, this reject gas (42) can be compressed by a reject gas compressor (45) and fed to an Inert Gases Rejection Unit (70) (IGRU). This IGRU separates the carbon species carbon monoxide CO, carbon dioxide CO₂ and methane CH₄ from the low-carbon fuel hydrogen H₂ and the inert gases nitrogen N₂ and Argon. The fuel stream (72) from the IGRU is enriched in H₂, N₂ and Argon and is sent as fuel to the combustion section (60), while the carbon-rich stream (71) is compressed by the hydrocarbon recycle compressor (55) and re-introduced to the reforming section (10) as feed gas, reducing the net import of hydrocarbon feed gas (1).

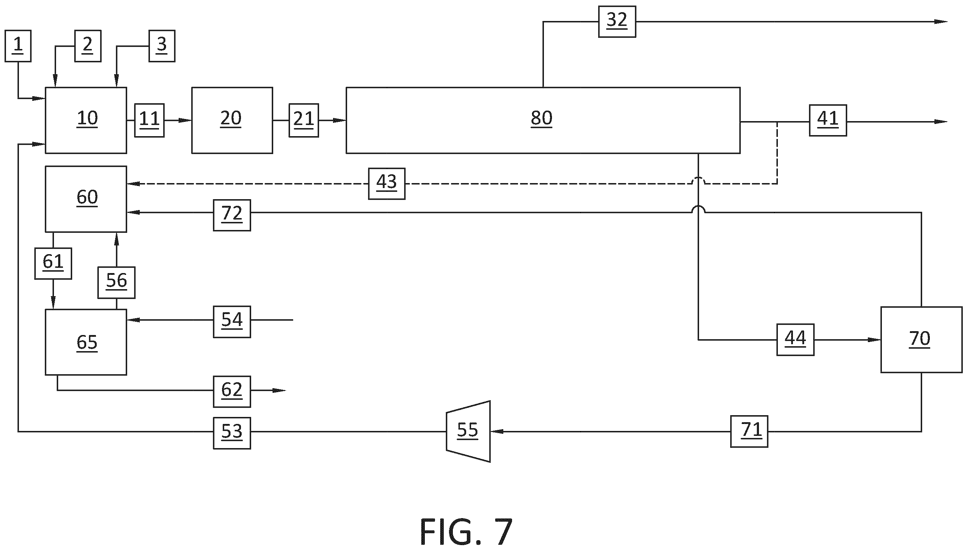

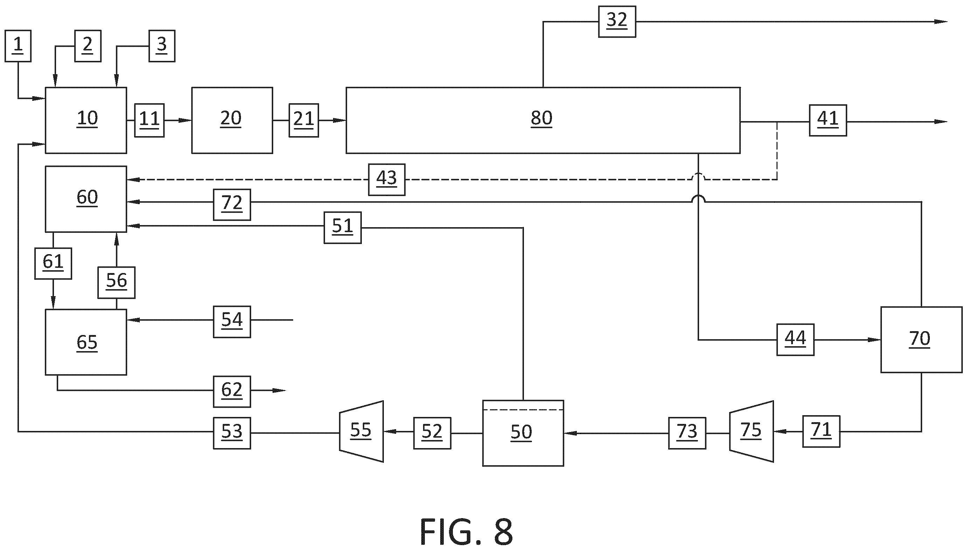

Make-up fuel to complete the fuel demands of the combustion section (60) can be provided from a slipstream (43) of the pure hydrogen product (41). A convection section (65) can recover heat from the hot flue gases (61) leaving the combustion section (60). The ambient air (54) that is used as source of combustion oxygen may also be pre-heated in the convection section (65). Both fuel streams (72) and (43) are low in carbon content (ideally, free from carbon content) and therefore the flue gas (62) released from the convection section (65) can have a very low CO₂ concentration. These embodiments therefore allow the generation of ultra-low carbon intensity hydrogen product because all carbon molecules entering or being recycled in the process can eventually be converted into CO₂ and can be captured by the CO₂ capture unit (30). Carbon capture rates in excess of 99.0 % are now achievable while generating hydrogen of high purity (e.g., 99.97 %) with high recovery in the Hydrogen Purification Unit (40). In some embodiments, the compressor (45) can be part of the Syngas Purification Section (80) that further comprises the CO₂ capture unit (30) and the Hydrogen Purification Unit (40) as also illustrated in FIG. 7 and FIG 8. In some embodiments, the reject gas feed stream (44) to the IGRU (70) is generated directly from the Syngas Purification Section (80) without need for compressor (45).

FIG. 2 depicts embodiments where inert gases are removed from the hydrocarbon recycle stream (53), such that the accumulation of inert gases in the recycle loop can be avoided or at least much reduced. This can result in a significant saving on power consumption for recycle gas compressors (45) and (55) and can also reduce the inert gases content of the CO₂-lean treated syngas (31) that is fed to the Hydrogen Purification Unit (40), in contrast to a hydrogen production plant as described by document EP4279446B1 and depicted in FIG.1, as illustrated in the Examples section below.

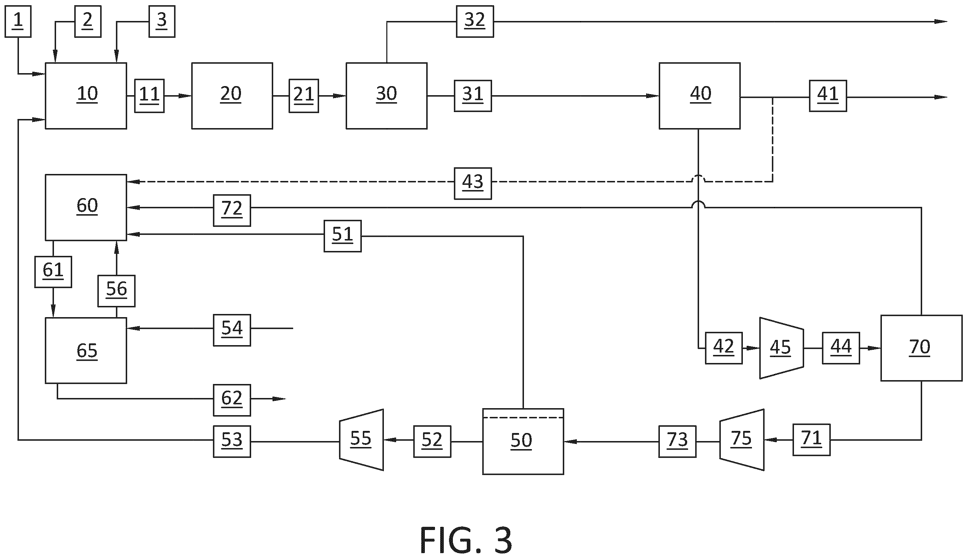

FIG. 3 depicts embodiments of a hydrogen production plant, process, or system according the present disclosure, wherein hydrocarbons (1) are fed with steam (2) and optionally oxygen (3) in a reforming section (10), shifting the H₂/CO rich reformed gas (11) to a CO₂/ H₂-rich syngas (21) in a water gas shift section (20) and capturing the CO₂ from the CO₂/ H₂-rich syngas (21) with a CO₂ capture unit (30), generating a CO₂ product stream (32) and a CO₂-lean treated syngas (31) that is fed to the Hydrogen purification unit (40) that generates the hydrogen of high purity, (e.g., 99.97 % or higher). The reject gas (42) from the hydrogen purification unit (40) contains the unrecovered hydrogen, hydrocarbons and inert gases that have been removed from the CO₂-lean treated syngas (31).

As shown in the embodiments of Figure 3, the reject gas (42) can be compressed by a reject gas compressor (45) and fed to an Inert Gases Rejection Unit (70), or IGRU. The IGRU separates the carbon species carbon monoxide CO, carbon dioxide CO₂ and methane CH₄ from the low-carbon fuel hydrogen H₂ and the inert gases nitrogen N₂ and Argon. The fuel stream (72) from the IGRU is enriched in H₂, N₂ and Argon and is sent as fuel to the combustion section (60), while the carbon-rich stream (71) can be compressed by carbon recycle compressor (75) to a hydrogen-selective membrane system (50). Permeate fuel stream (51) contains the hydrogen extracted from the compressed carbon stream (73) already depleted of inert gases leaving the compressor (75) and entering the membrane (50), so less hydrogen is recycled with the carbon recycle stream (52) leaving the membrane (50) that is re-introduced to the reforming section (10) as additional feed gas via (optionally) hydrocarbon recycle compressor (55).

The combustion section (60) receives its primary fuel from the IGRU as the fuel stream enriched in inert gases (72) together with the low carbon hydrogen rich permeate stream (51) from the membrane unit. Make-up fuel to complete the fuel demands of the combustion section (60) can be provided from a slipstream (43) of the pure hydrogen product. A convection section (65) can recover heat from the hot flue gases (61) leaving the combustion section (60). The ambient air (54) that is used as source of combustion oxygen may also be pre-heated in the convection section (65). All the fuel streams (72), (51) and (43) can be low in carbon content (ideally, free from carbon content) and therefore the flue gas (62) released from the convection section (65) can be very low in CO₂ concentration. This plant therefore can allow the generation of ultra-low carbon intensity hydrogen product because all carbon molecules entering or being recycled in the process can eventually be converted into CO₂ and can be captured by the CO₂ capture unit (30). Carbon capture rates in excess of 99.0 %, for example, are now achievable while generating hydrogen of high purity (e.g., 99.97 %) with high recovery in the Hydrogen Purification Unit (40).

In the embodiments of FIG. 3, the combination of IGRU (70) and membrane unit (50) allows balancing the hydrogen extraction to the fuel with the recycling of the carbon molecules. In some IGRU designs, there may be increased slippage of carbon molecules towards the fuel stream (72) while aiming for a reduction of the pure hydrogen fuel stream (43) via a high recovery of Hydrogen towards the fuel stream (72) by the IGRU (70). In these cases, adding a membrane selective for hydrogen (50) on the compressed carbon recycle stream (73) allows maintaining low carbon slippage to the fuel stream (72) from the IGRU (70) while extracting the additional hydrogen required as fuel as low carbon permeate fuel (51), reducing the amount of hydrogen recycled as feed and reducing the flow rate of pure hydrogen fuel (43).

The hydrogen-selective membrane in these embodiments may be based on glassy polymeric membranes, where the membrane material belongs to one of or a combination of poly-imide, poly-sulphone, poly-aramid and/or cellulose acetate, or other polymeric materials that exhibit a selectivity to selectively permeate hydrogen.

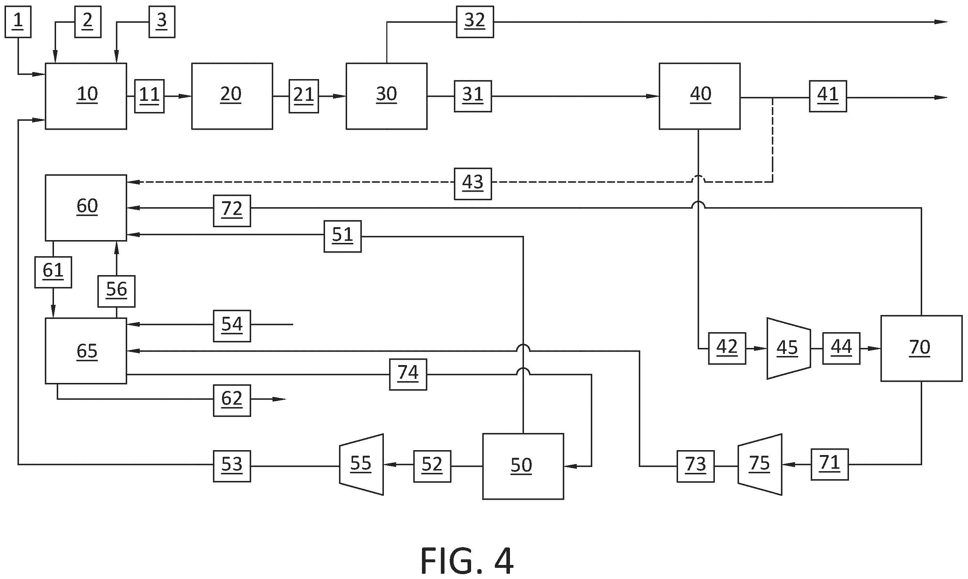

FIG. 4 depicts embodiments of a hydrogen production plant, process, or system according to the present disclosure, wherein the process comprises an IGRU (70) and hydrogen-selective membrane (50) and integrated heat recovery. Figure 4 describes further enhanced embodiments of the disclosure with the use of a hydrogen-selective membrane unit (50) that is based on palladium sheets. Palladium sheets are very selective for Hydrogen H₂ but require operating temperatures in the range 300-350 °C that require additional heating.

In some embodiments applying the use of membranes based on Palladium sheets, additional benefits from heat integration with the hydrogen plant, process, or system can be obtained. The carbon-rich stream (71) from the IGRU (70) can be compressed by the carbon recycle compressor (75) to high-pressure carbon reject gas stream (73). This stream can be sent to the convection section (65) to exchange heat against the hot flue gas (61) from the combustion section (60) to preheat it to the required operating temperature of the hydrogen-selective membrane unit (50) based on Palladium sheets. The membrane unit can extract a hydrogen rich stream (51) that can be a preheated fuel stream for the combustion section (60), while the carbon-rich retentate stream (52) can be recycled hot to the feed section of the hydrogen plant. The carbon recycle compressor (55) may be optional in these configurations.

The recycle carbon stream (53) can require heating in the reforming section so this heat can always be delivered to the stream. Pre-heating the fuel stream (51) constitutes a small saving in firing duty and therefore reduces the quantity of hydrogen-rich fuel to the combustion section (60). These configurations therefore represent an optimization of the heat integration of the Palladium-sheet based membrane unit (50) in the flow schemes of the disclosure. The high selectivity of the Palladium sheets towards hydrogen ensures that the carbon slippage to the fuel permeate stream (51) remains ultra-low.

In general, because in the flow schemes of many embodiments of this disclosure, the inert gases are to a large extent removed from the hydrocarbon recycle stream (53), the accumulation of inert gases in the recycle loop can be avoided. This can result in a significant saving on power consumption for recycle gas compressors (45) and (55) and also reduces the inert gases content of the CO₂-lean treated syngas (31) that is fed to the Hydrogen Purification Unit (40) as explained in the examples section.

The rejection of inert gases from the recycle loop provides additional benefits relating to operational robustness of the hydrogen plant, process, or system. As the level of inert gases N₂ in the hydrocarbon feed to the hydrogen plant can vary over time, the accumulation of inert gases in the plant may not always be constant. A fluctuation in the inert gas content of the hydrocarbon feed gas is expected to lead to large performance problems when feed gases with higher N₂ content than the design case will need to be treated. This also raises a concern for the robustness of the plant, process, or system design to deal with what are considered as non-relevant changes in feed composition in conventional hydrogen plant design. Even though technical solutions exist to reduce the nitrogen N₂ content of the hydrocarbon feed (1) and/or to lower the Argon levels in the Oxygen (3) used in oxidative reforming, they may not always be applied in the design of a hydrogen plant or process as they may result in unacceptable loss of feed hydrocarbon gas and/or increased power consumption for the oxygen generation. Similarly, even when such solutions would be applied, there can still be a variation in the reduced nitrogen N₂ and argon levels entering the hydrogen plant, and lowering their concentration within a recycle loop will always be beneficial to the overall power consumption, conversion, efficiency, and plant robustness. Therefore, embodiments involving reducing the content of inert gases at a single location inside the recycle loop, can make it easier for the plant and the PSA-based hydrogen purification unit (40) to maintain the high-purity hydrogen product specification at varying input levels of feed stream inert gas content and contribute to the robustness of the plant design under varying feed composition and composition changes due to temporary upsets.

In some embodiments, the reject gas stream (42) can be made available at sufficiently high pressure to feed it directly into the IGRU (70) that separates the reject gas stream (42) into fuel stream (72) enriched in H₂, N₂ and Argon that is sent to the combustion section (60), and a carbon-rich stream (71) that is compressed by the hydrocarbon recycle compressor (55) and re-introduced to the reforming section (10) as feed gas, reducing the net import of hydrocarbon feed gas (1). In these embodiments, reject compressor (45) would not be required. This omission from the flow scheme reduces the power consumption of the overall hydrogen plant, but typically also reduces the hydrogen recovery from the purification section into stream (41). The hydrogen content of reject gas (42) increases, but can be recovered into fuel stream (72) by the IGRU, reducing the flow rate of pure hydrogen fuel stream (43), which may result in an overall performance that is similar to the performance of a plant with compressor (45) and a higher hydrogen recovery.

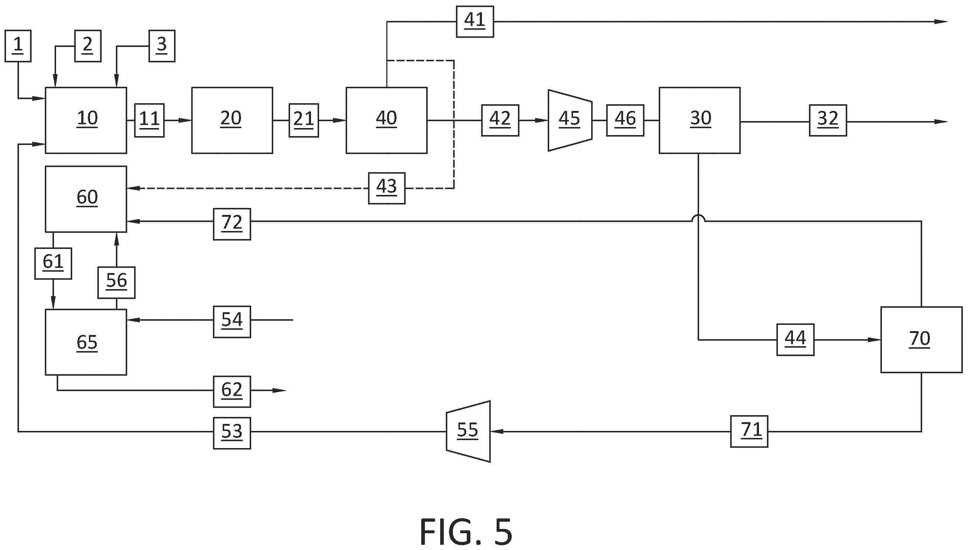

FIG. 5 depicts embodiments of a hydrogen production plant, process, or system according to the disclosure, wherein the Hydrogen Purification Unit (40) and the CO₂ capture Unit (30) order is reversed compared to the embodiments depicted in FIG. 2.

It is evident that the concepts of the current disclosure remain equally valid in the cases where the sequence of the hydrogen purification unit and the CO₂ capture unit are inverted. In some embodiments of a hydrogen plant, process, or system where syngas (21) is first sent to the hydrogen purification unit (40) to generate high-purity hydrogen product (41) and reject gas (42), and reject gas (42) is then sent to reject gas compressor (45) to generate a high pressure reject gas (46), which is used as feed gas for the CO₂ capture unit (30) that extracts the CO₂ to a CO₂ product stream (32) and produces another stream (44) that is lean in Hydrogen and CO₂ and enriched in carbon molecules and inert gas molecules that can be used as feed gas stream to the IGRU (70). IGRU (70) extracts the hydrogen and inert gases to fuel stream (72) and rejects the carbon monoxide, carbon dioxide and methane preferentially to the carbon-enriched stream (71) that is recycled back as feed to the hydrogen plant after being compressed by recycle compressor (55). The extraction of the inert gases by the IGRU also prevents their accumulation in the recycle loop in a plant designed according to these process flow schemes. The process flow schemes of a plant, process, or system implanting this variation of the process flow scheme is depicted in FIG. 5.

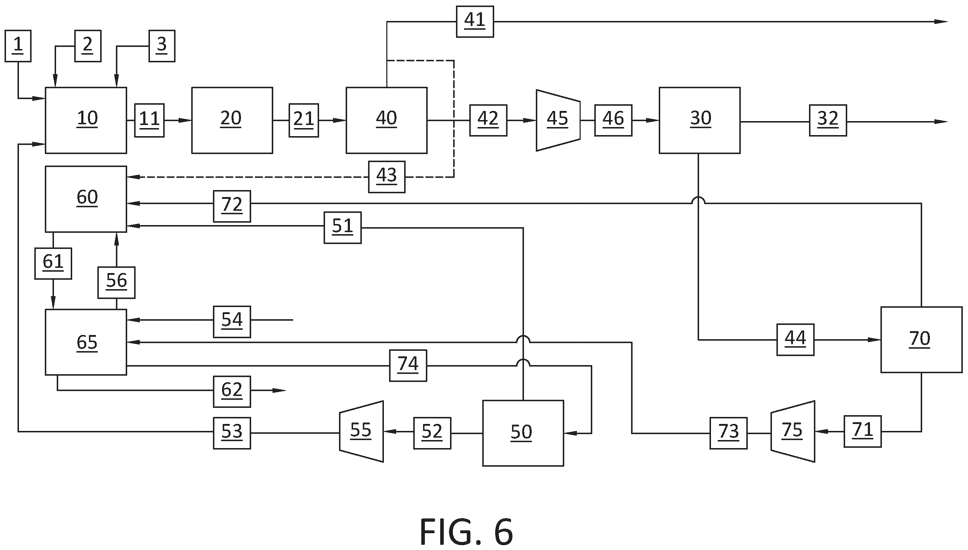

FIG. 6 depicts embodiments of a hydrogen production plant, process, or system according to the disclosure comprising the IGRU (70) and Hydrogen-Selective Membrane Unit (50) and in which the Hydrogen Purification Unit (40) and the CO₂ Capture Unit (30) order is reversed as compared to FIG. 3. FIG. 6 represents alternative embodiments according to the same principle of reversing the order of the Hydrogen Purification Unit (40) and CO₂ capture Unit (30), with the addition of both IGRU (70) and Hydrogen-Selective Membrane Unit (50) to the carbon recycle loop. The embodiments of FIG. 6 also include the heat integration of the membrane unit (50) and the convection section (65) that has also been illustrated in FIG. 4. Alternative embodiments with the inclusion of the membrane unit (50) but without heat integration with the convection section (65) similar to the flow schemes as depicted in FIG. 3 may be used with the flow schemes of FIG. 6 without compromising on the reduction in efficiency with respect to the removal of Nitrogen N₂ and Argon Ar from the carbon recycle loop.

FIG. 7 depicts embodiment of a hydrogen production plant, process, or system according to the disclosure, comprising a Syngas Purification Section (80) and an IGRU (70).

FIG. 8 depicts embodiments of a hydrogen production plant, process, or system according to the disclosure, comprising a Syngas Purification Section (80), with an IGRU (70) and a hydrogen selective membrane (50).

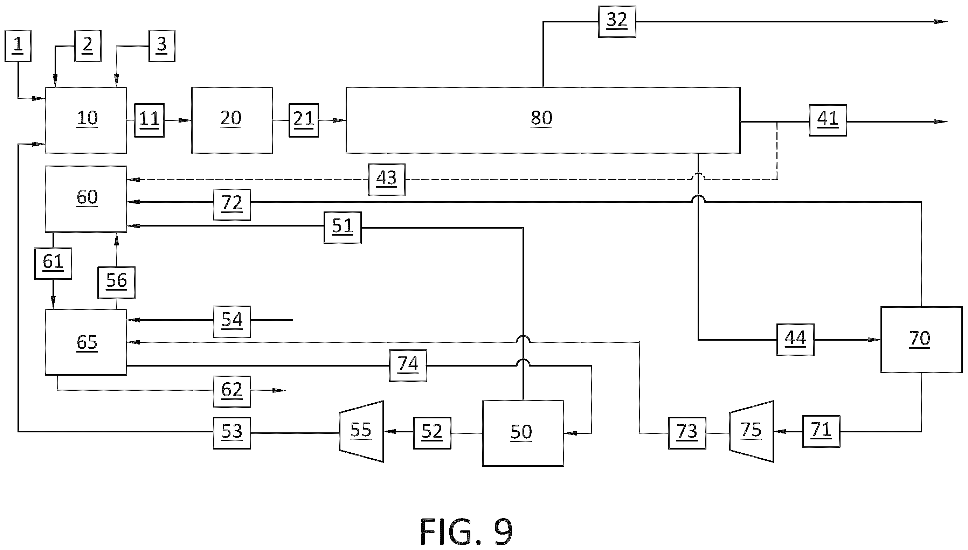

FIG. 9 depicts embodiments of a hydrogen production plant, process, or system according to the disclosure, comprising a Syngas Purification Section (80), with an IGRU (70) and a hydrogen selective membrane (50) with heat integration.

In some embodiments (not shown in the FIGs), the syngas purification section (80) is configured to generate a CO₂ product stream (32); a stream (41) containing hydrogen of high purity (e.g., 99.97 % (mole) or higher); a gas stream (90) at a pressure lower than the pressure of shifted syngas stream (21), that is depleted in CO₂ and containing one or more of hydrogen, hydrocarbons and/or inert gases; and a reject gas stream (42) containing the remainder of the unrecovered hydrogen, hydrocarbons and inert gases. In some embodiments, there is a passageway (91) for mixing at least part of this gas stream (90) with the hot flue gas (61) from the combustion section (60) to the convection section (65). In some embodiments, there is a passageway (92) for routing at least part of this gas stream (90) as additional fuel to the combustion section (60). In some embodiments, there is a passageway (93) to route at least part of this gas stream (90) to the feed inlet side of the Inert Gas Rejection Unit (IGRU) (70). In some embodiments, there is a passageway (94) to feed at least part of this gas stream (90) to the membrane system (50). In some embodiments, the gas stream (90) is generated by pressure reduction of the CO₂-loaded solvent in the CO₂ capture unit (30). In some embodiments, the gas stream (90) is generated as a 3^{rd} product stream from a three-product PSA system used as hydrogen purification unit (40). In some embodiments, the gas stream (90) is generated by pressure reduction of a condensed CO₂ liquid stream in a cryogenic CO₂ capture unit (30). In some embodiments, the gas stream (90) is generated as a 3^{rd} product stream from a three-product PSA system used in the syngas purification section (80). In some embodiments, the gas stream (90) is generated by pressure reduction of a CO₂-rich liquid stream in the syngas purification section (80).

In some embodiments, all or at least part of the hydrocarbon feed to the plant or process may be of biogenic origin. Examples include (but are not limited to) biogas or methane generated from fermentation of organic waste or landfill gas, hydrocarbon gases or liquids generated by the processes converting hydrogenated esters and/or fatty acids, or any other hydrocarbon stream generated from non-fossil carbon sources. The plants or processes designed according to the embodiments of this disclosure can achieve similar CO₂ capture rates from these feed types. The quantities of CO₂ generated from biogenic feed sources may under some conditions be excluded from CO₂ emission calculations, such that plants or processes designed in accordance with the embodiments of this invention utilizing biogenic feeds, may therefore even be considered as having an overall negative carbon intensity.

The skilled person will be able to design and operate suitable operational units of the syngas production and separation plant or used in a process according to the invention, using the present disclosure in combination with common general knowledge and optionally one or more of the documents cited herein. E.g. the skilled person will be able to provide suitable process/plant units and passageways, e.g. pipes, lines, tubes or other channels for passing gases or liquids from one processing unit to another, directly or indirectly, based on the present disclosure, the cited documents and common general knowledge.

For the purpose of clarity and a concise description, features are described herein as part of the same or separate embodiments, however, it will be appreciated that the scope of the invention may include embodiments having combinations of all or some of the features described.

### EXAMPLES

The examples described are illustrative and intended to describe the subject matter discussed herein and are not intended to limit the scope of the disclosed concepts. The following sections describe various additional features and examples with reference to the drawings in which the numerals indicate like elements but, like the illustrative examples, should not be used to limit the present disclosure.

As used below, any reference to a series of examples is to be understood as a reference to each of those examples disjunctively (e.g., "Examples 1-4" is to be understood as "Examples 1, 2, 3, or 4").

The following examples have been included to provide guidance to one of ordinary skill in the art for practicing representative embodiments of the presently disclosed subject matter. In light of the present disclosure and the general level of skill in the art, those of skill can appreciate the following examples are intended to be exemplary only and that numerous changes, modification, and alterations can be employed without departing from the scope of the presently disclosed subject matter.

The following examples describe hydrogen plants, processes, systems, and methods of use. Each of Examples 1-4 describes a hydrogen plant comprising an IGRU. The performance of four IGRU processes (EXAMPLES 1-4) was evaluated and compared to 2 known processes (Base 1 and 2). The Base 1 process is a process according to the flow scheme of document EP4244182A1, which comprises a reject gas recycle. The Base 2 process is a process according to the flow scheme of document EP4279446B1 which comprises a membrane unit and hydrocarbon retentate recycle.

For each of the following EXAMPLES 1-4, the Inert Gases Rejection Unit IGRU (70) was fed with a feed stream (44) at a pressure that was typically around 7 bar g. The IGRU separated the components from the feed stream (44) into 2 separate streams product streams (71) and (72). In the "ideal" split situation, 100 % of components H₂ through Helium are recovered to the fuel stream (72) whereas 100 % of components CO through H₂O are rejected to carbon recycle stream (71). TABLE 1 illustrates the selectivity of the IGRU processes of Examples 1-4.

**TABLE 1 Inert Gases Rejection Unit Performance**

| **Component** | **Target Stream** | **Example 1** | **Example 2** | **Example 3** | **Example 4** | **Ideal** |
|---|---|---|---|---|---|---|
| H₂ | (72) | 86.5 % | 88.5 % | 87 % | 96 % | 100 % |
| N₂ | (72) | 58 % | 44 % | 31 % | 11 % | 100 % |
| Ar | (72) | 68 % | 68 % | 63.5 % | 23 % | 100 % |
| O₂ | (72) | 68 % | 68 % | 63.5 % | 23 % | 100 % |
| He | (72) | 86.5 % | 88.5 % | 87 % | 96 % | 100 % |
| CO | (71) | 83.5 % | 99.9 % | 100 % | 86 % | 100 % |
| CO₂ | (71) | 100 % | 100 % | 100 % | 56 % | 100 % |
| CH₄ | (71) | 92 % | 96 % | 99 % | 91 % | 100 % |
| CxHy | (71) | 100 % | 100 % | 100 % | 100 % | 100 % |
| H₂O | (71) | 100 % | 100 % | 100 % | 0.2 % | 100 % |

As can be seen in Table 1, for Example 1, 58 % of component N₂ is recovered to the fuel stream (72) while 83.5 % of component CO is rejected to the carbon stream (71). The specific recovery rates are dependent on the design of the PSA unit. The design of the PSA refers to the selection of the adsorbent mix, the number of PSA adsorbers, the PSA process steps, their durations and the pressure levels of the individual PSA steps.

Example 1 is a process according to the present disclosure with an IGRU and carbon-rich gas recycle with the component recoveries as indicated under EXAMPLE 1 in Table 1. The PSA process selected for the IGRU of EXAMPLE 1, can contain of the following steps:
a co-current adsorption step, feeding feed gas stream (44) to the bottom of the adsorber bed, extracting the fuel stream (72) from the top side of the adsorber vessel at a pressure close to the inlet pressure of feed gas stream (44);
a co-current rinse step, generating some additional gas from the top of the vessel towards the fuel stream (72) by feeding a stream obtained from the compression of the first counter-current depressurization step;
a first co-current depressurization step, depressurizing the adsorber over top to repressurize another adsorber at lower pressure to a pressure that is approximately half of the feed gas pressure;
a second co-current depressurization step, further depressurizing the adsorber over top to an intermediate pressure less than half of the feed gas pressure, to generate a gas stream to regenerate another adsorber in counter-current purging;
a first counter-current depressurization step, depressurizing the adsorber towards the bottom to generate a gas stream at a pressure close to ambient pressure, which is sent to a rinse gas compressor and that is used as the feed gas inlet for the rinse step;
a second counter-current depressurization step, depressurizing the adsorber towards the bottom to generate a gas stream at a pressure below ambient pressure, to generate a first stream that is sent to a vacuum pump;
a counter-current purging step at a pressure below ambient pressure, utilizing a gas stream generated by another vessel in co-current depressurization and/or a part of the fuel stream (72), generating a second stream that is sent to a vacuum pump;
a counter-current repressurization step utilizing gas provided from another vessel in co-current depressurization step; and
a final repressurization step using a part of either the fuel stream (72) or the feed gas stream (44).

In Example 1, the vacuum pump receiving the gas from the second counter-current depressurization step and the counter-current purging step discharges these gases at a pressure above the ambient pressure, generating the hydrocarbon recycle stream (71). In the IGRU from Example 1, a PSA process achieving a relatively high rejection rate of hydrogen, nitrogen and argon was applied. This rejection still slips some carbon species to the fuel stream (72), but the selectivity was much higher in comparison to the membrane system applied by the Base 2 process flow scheme. As illustrated by the performance summary numbers in Table 2, for the same carbon capture rate of 99.0 %, the process thereby rejects less carbon to the fuel stream for the same rejection of inert gases, allowing more carbon to be recycled to the feed side for a lower accumulation of inert gases. This resulted in an improved PSA (40) hydrogen recovery and lower power consumption. The recycling of the inert gases was reduced by a factor of 10.

Example 2 is a plant according to the present disclosure with an IGRU and carbon-rich gas recycle with the component recoveries as indicated under EXAMPLE 2 in Table 1. Example 2 applies an IGRU (70) process according to a different PSA design than the process of Example 1. The PSA processes of EXAMPLE 2 excludes the rinse step and rinse gas compressor of Example 1. The gas generated from the first counter-current depressurization step then constitutes a second part of the hydrocarbon recycle stream (71).

The design of Example 2 sacrificed some inert gas recovery, but achieved an improved rejection of carbon species. This resulted in a slight increase in the accumulation of inert gases in the plant, still more than 5 times lower in comparison to Base 2 process flow scheme, with only a marginal increase in the feed and power consumption. In the plant of Example 2, the carbon capture rate was improved to 99.8 %, or capturing 80% of the remaining CO₂ emissions of the Base 2 process with a 5 % reduction in power consumption for only a 0.2 % increase in feed consumption.

Example 3 is a plant according to the present disclosure comprising an IGRU and carbon-rich gas recycle with the component recoveries as indicated under EXAMPLE 3 in Table 1. The plant of Example 3 applies an IGRU (70) process according to a slightly different design than Examples 1 and 2. The design of Example 3 further sacrifices some inert gases recovery to target almost complete rejection of the carbon species. This resulted in a further increase in the accumulation of inert gases in the plant, but still lower than for the flow schemes of the prior art (Base 1 and 2) with still lower electrical power consumption. Due to the nearly total rejection of carbon species in the IGRU, the carbon capture rate for this flow scheme was increased to 99.95 %, or nearly full carbon capture was achieved. This was not possible with the other process flow schemes.

The plants based on the process flow schemes of Example 1 and Base 2 achieve the same carbon capture rate. As far as the rejection of inert gases goes, the performance of the Base 2 scheme is identical to the performance of a plant according to the concepts of this disclosure, with the IGRU performance as illustrated by the values of EXAMPLE 4 from Table 1. Using a hydrogen-selective membrane unit as IGRU is less efficient than a PSA unit, as demonstrated by the performance numbers from **Table 2.** However, selecting a different membrane material and/or membrane operating conditions may result in a different separation performance that could be closer to the results of the PSA based processes. This illustrates that the IGRU can be based on other processes than Pressure Swing Adsorption, although for the preferred selectivity between "fuel" components and "carbon" components, (without being bound by theory) it is expected that adsorption-based processes with vacuum regeneration will be preferred.

**TABLE 2 Performance Comparison (Carbon Intensity of electrical power: 220 kg CO₂/MWh)**

| **Parameter** | **Unit** | **Base 1** | **Base 2** | **Example 1** | **Example 2** | **Example 3** |
|---|---|---|---|---|---|---|
| Feed consumption | kmol/h | 4647.3 | 4596.4 | 4602.5 | 4608.7 | 4611.4 |
| N₂ in feed | kmol/h | 74.2 | 73.4 | 73.5 | 73.6 | 73.6 |
| O₂ consumption | kmol/h | 1366.6 | 1249.0 | 1261.9 | 1265.4 | 1270.2 |
| Ar in O₂ | kmol/h | 2.7 | 2.5 | 2.5 | 2.5 | 2.5 |
| H₂ Production | kmol/h | 12593.9 | 12593.9 | 12593.9 | 12593.9 | 12593.9 |
| Recycle flow to feed | kmol/h | 3358.1 | 1023.3 | 664.3 | 703.8 | 833.6 |
| N₂ in recycle to feed | kmol/h | 402.2 | 519.3 | 51.1 | 89.9 | 157.3 |
| Ar in recycle to feed | kmol/h | 10.9 | 5.6 | 0.8 | 0.8 | 1.0 |
| H₂ PSA (40) Inlet Flow | kmol/h | 19780.7 | 17062.8 | 17177.2 | 17261.6 | 17409.3 |
| N₂ in PSA feed | % | 2.4081 | 3.3777 | 0.7250 | 0.9467 | 1.3261 |
| Ar in PSA feed | % | 0.0689 | 0.0458 | 0.0196 | 0.0195 | 0.0205 |
| PSA (40) H₂ Recovery | % | 83.0 | 78.5 | 88.5 | 88.0 | 87.5 |
| N₂ to fuel | kmol/h | 71.6 | 70.8 | 71.0 | 71.0 | 71.1 |
| Ar to fuel | kmol/h | 2.2 | 1.9 | 2.0 | 2.0 | 2.0 |
| Carbon Capture Rate | % | 98.62 | 99.02 | 99.02 | 99.82 | 99.95 |
| Power Consumption | kW | 46812 | 42847 | 40677 | 40744 | 42044 |
| Specific Power Consumption | kWh/kg H₂ | 1.844 | 1.688 | 1.602 | 1.605 | 1.656 |
| Feed efficiency (HHV) | % | 84.3 | 85.2 | 85.1 | 85.0 | 85.0 |
| Carbon Intensity (1) | kg/kg | 0.122 | 0.087 | 0.087 | 0.020 | 0.009 |
| Carbon Intensity (1+2) | kg/kg | 0.527 | 0.459 | 0.440 | 0.373 | 0.373 |

**TABLE 2** illustrates the performance of process design in accordance with the current disclosure (Examples 1-4) in comparison to known processes (Base 1-2). All 5 cases represent the performance of a blue hydrogen production plant to produce 1000 MW (HHV) of hydrogen product with a purity of 99.97 % (mole) from oxidative reforming of natural gas. The indicated power consumption is the power consumption of all the equipment in the hydrogen plant, including the carbon capture unit and air separation unit used to generate the Oxygen O₂ for the oxidative reforming process. The processes target a carbon capture rate of 98.5 % or higher. The carbon intensity used for the scope 2 emissions associated with electrical power consumption for the Carbon Intensity (1+2) is 220 kg CO₂e/MWh.

As illustrated by the examples, applying the disclosed concepts can reduce the power consumption for certain hydrogen plant configurations from 1.85 kW/kg H₂ to 1.65 kWh/kg H₂ or even 1.60 kWh/kg H₂, for example, i.e. a reduction by 10 to 13 %, while improving the carbon capture rate.

The PSA processes used in the IGRU of EXAMPLE 1, EXAMPLE 2 and EXAMPLE 3 utilize a top layer of molecular sieve adsorbent selective for the adsorption of Carbon Monoxide (CO), and bottom adsorbent layers taken from the group of activated carbon, silica gel and/or activated alumina to adsorb methane CH₄, carbon dioxide (CO₂) and moisture. The rinse step allows rejecting larger fractions of inert gases, at the cost of slipping some additional carbon molecules to the fuel stream. A person of ordinary skill in the art will understand that additional process steps may be introduced if this contributes to achieving or improving the targeted efficiency of the process. Some non-limiting additional steps may include a third co-current depressurization of the adsorber to generate an intermediate pressure stream that is evacuated from the process, or optionally recycled to the inlet of the reject gas compressor (45) to be recycled as additional feed gas to the IGRU PSA process.

Regardless of the adsorbent selection and the inclusion or exclusion of rinse, vent or other steps, the regeneration of the beds at a pressure below the ambient pressure and the use of a vacuum pump is considered to be advantageous in some embodiments in order to obtain the desired separation between the non-adsorbing or lightly adsorbing inert gases and adsorbing carbon species. A process achieving the same performance with a counter-current purging step taking place at a pressure slightly above ambient pressure and avoiding the need for a vacuum pump, would require a PSA feed gas inlet pressure that would be around 2-3 times higher, i.e. around 25 bar g, which would require a higher power consumption for the reject gas compressor (45) than what can be saved by eliminating the vacuum pump. Nevertheless, in some cases where vacuum regeneration would not be preferred, this alternative operation can be selected to obtain a similar performance.

The PSA process used by the Inert Gases Rejection Unit (70) may, in some embodiments, apply a three-product PSA process to enhance the rejection of inert gases. The third product stream may be recycled within the IGRU as a rinse step or as a feed stream to the IGRU or can be sent to either stream (71) or (72), depending on its exact composition.

In some embodiments, an alternative PSA process can be designed for the IGRU (70), operating at a higher feed pressure of approximately 25 bar g to avoid the vacuum regeneration. While the process performance would remain identical, achieving the same total carbon capture rate and feed consumption rate, the total electrical power consumption would increase by approximately 5 % due to the increased power consumption of reject gas compressor (45) to reach the higher IGRU inlet pressure.

The IGRU process used by EXAMPLE 4 is not based on Pressure Swing Adsorption. It is the performance of a membrane system selective for the permeation of hydrogen.

## Claims

1. A hydrogen production plant comprising:
a reforming section for converting a hydrocarbon feed into a reformed gas;
a water gas shift section for converting the reformed gas into a syngas;
a syngas purification section for treating the syngas comprising an optional compressor and at least one of:
a CO₂ capture unit, and
a hydrogen purification section,
wherein the syngas purification section generates at least a CO₂-rich product stream, a high-purity Hydrogen product stream, and a reject gas depleted in Hydrogen and CO₂;
an inert gas rejection unit (IGRU) configured to be fed the reject gas depleted in Hydrogen and CO₂ and to generate a fuel stream comprising one or more of H₂, N₂, Argon, or Helium, and a carbon recycle stream comprising one or more of CO, CH₄, or CO₂;
a carbon recycle compressor configured to compress the carbon recycle stream to produce a compressed carbon recycle stream;
a passageway for recycling at least a portion of the compressed carbon recycle stream to the reforming section;
a combustion section configured to generate heat from at least one of:
at least a portion of the fuel stream comprising one or more of H₂, N₂, Argon, or Helium;
at least a portion of the high-purity hydrogen product stream; or
a low-carbon make-up fuel stream; and
a convection section configured for heat recovery.

2. The hydrogen production plant of claim 1, wherein the carbon recycle stream comprising one or more of CO, CH₄, or CO₂, or the compressed carbon recycle stream is further separated by a membrane selective for the permeation of hydrogen to generate a hydrogen-enriched fuel stream that is routed via a passageway to the combustion section, and a hydrogen-depleted steam that is recycled to the reforming section.

3. The hydrogen production plant of claim 1 or 2, wherein the IGRU comprises a Pressure Swing Adsorption (PSA) system, or wherein the IGRU comprises a Vacuum Pressure Swing Adsorption (VPSA) system, or wherein the IGRU comprises a Membrane-Based Separation System.

4. The hydrogen production plant of any one of the preceding claims, wherein the reforming section comprises one or more reforming reactors comprising a pre-reformer, a steam methane reformer (SMR), an autothermal reformer (ATR), a partial oxidation (POX), a heat-recuperative reformer installed in series, and a heat-recuperative reformer installed in parallel.

5. The hydrogen production plant of any one of the preceding claims, wherein the reforming section comprises a feed pre-treatment section configured to remove feed gas impurities that would poison downstream catalysts; optionally, wherein the feed gas impurities comprise sulphur, chlorides, fluorides, (other) halides, mercury, sodium, other metals, or any combinations thereof.

6. The hydrogen production plant of any one of the preceding claims, wherein the water gas shift section comprises at least one or more of a high temperature shift, a medium temperature shift, a low temperature shift, and an isothermal shift.

7. The hydrogen production plant of any one of the preceding claims, wherein the CO₂-rich product stream comprises at least 95 %, preferably at least 99 %, or more preferably at least 99.5 % of the carbon moles present in the hydrocarbon feed.

8. The hydrogen production plant of any one of the preceding claims, wherein the high-purity hydrogen product stream comprises at least 99.97 % H₂ by mole.

9. The hydrogen production plant of any one of claims 2-12, wherein the hydrogen-selective membrane comprises at least one of a polymeric material and a palladium sheet.

10. The hydrogen production plant of any one of the preceding claims, wherein the hydrogen purification section comprises a pressure swing adsorption (PSA) system.

11. The hydrogen production plant of any one of the preceding claims, wherein the CO₂ capture unit comprises at least one of: a solvent wash absorption system, a CO₂ Pressure Swing Adsorption system with at least 2 product streams, a three-product CO₂ Pressure Swing Adsorption System, a CO₂ Vacuum Pressure Swing Adsorption system, a cryogenic CO₂ separation system, or a membrane system selective for the permeation of CO₂.

12. The hydrogen production plant of any one of the preceding claims, wherein the convection section for heat recovery performs at least one of: feed gas preheating, combustion air preheating, fuel preheating, steam generation, recovering heat from a hot flue gas to release a colder flue gas that is low in carbon content, or any combinations thereof.

13. The hydrogen production plant of any one of the preceding claims, wherein the colder flue gas contains less than 5 % of the carbon moles present in hydrocarbon feed, preferably less than 2%, preferably less than 1%, preferably less than 0.5 %.

14. The hydrogen production plant of any one of the preceding claims, further comprising a passageway for recycling a second portion of the compressed carbon recycle stream to the water gas shift section.

15. A method for producing hydrogen comprising:
reforming a hydrocarbon feed with steam and optionally oxygen in a reforming section to produce a reformed gas stream;
converting the reformed gas stream into a syngas using a water gas shift section;
treating the syngas comprising:
generating a CO₂ -rich product stream using a CO₂ capture unit,
generating a high-purity hydrogen product stream using a hydrogen purification unit,
recovering a reject gas depleted in Hydrogen and CO₂, and
optionally compressing the reject gas depleted in Hydrogen and CO₂;
feeding the reject gas depleted in Hydrogen and CO₂ to an Inert Gas Rejection Unit demonstrating a selectivity to separate H₂ and one or more of N₂, Argon, Helium selectively to a fuel stream, and rejecting at least one or more of CO, CH₄, or CO₂ selectively to a carbon recycle stream;
compressing the carbon recycle stream using a carbon recycle compressor to produce a carbon recycle stream;
recycling the carbon recycle stream back to the reforming section;
generating heat using a combustion section; and
recovering heat using a convection section.
